# EUROPÄISCHE PATENTSCHRIFT

(11) **EP 4 263 356 B1**
(45) Veröffentlichungstag und Bekanntmachung des Hinweises auf die Patenterteilung: **31.07.2024**
(21) Anmeldenummer: 22817622.8
(22) Anmeldetag: 11.11.2022
(51) Int. Cl.: B64F 1/36, G01V 5/20, G06Q 10/08, G06Q 50/26

(54) **SICHERHEITSKONTROLLSYSTEM UND SICHERHEITSKONTROLLVERFAHREN**
SECURITY INSPECTION SYSTEM, AND SECURITY INSPECTION METHOD
SYSTÈME ET PROCÉDÉ D'INSPECTION DE SÉCURITÉ

(30) Priorität: 12.11.2021 DE 102021129504
(43) Veröffentlichungstag der Anmeldung: 25.10.2023
(73) Patentinhaber: Hörmann Klatt Conveyors GmbH, 5202 Neumarkt a. Wallersee (AT)
(72) Erfinder: KLATT, Peter, 5202 Neumarkt a. Wallersee (AT)
(74) Vertreter: Tetzner, Michael
(86) Internationale Anmeldenummer: PCT/EP2022/081615
(87) Internationale Veröffentlichungsnummer: WO 2023/084019

(56) Entgegenhaltungen:
- EP-A1- 1 981 787
- WO-A1-2020/021580
- WO-A1-2020/249192
- US-A1- 2005 193 648
- US-A1- 2012 066 158
- US-B2- 7 415 094

## Beschreibung

Die Erfindung betrifft ein Sicherheitskontrollsystem und ein Sicherheitskontrollverfahren zur Kontrolle von Gepäck einer Person.

Die Sicherheitskontrolle von Personen, insbesondere Passagieren und deren Handgepäck ist ein fester Bestandteil einer jeden Flugreise. Egal ob innereuropäisch oder international, die Prozeduren und auch das Aussehen der dazugehörigen Anlagen haben sich in den letzten Jahrzehnten nur unwesentlich weiterentwickelt, was nicht zuletzt auch den behördlichen Vorgaben geschuldet ist, wonach die zu verwendenden Gerätschaften sowie die einzuhaltenden Abläufe vorgegeben werden. In den letzten Jahren sind jedoch Neuerungen angedacht und der Einsatz modernerer Technologien, wie beispielsweise der Einsatz von Computertomographen zur Bilderzeugung der Handgepäckskontrolle, stufenweise genehmigt worden.

Aufgrund der steigenden Fluggastzahlen haben die Flughafenbetreiber ein gesteigertes Interesse daran, die Effizienz der Sicherheitskontrolle zu steigern und die Personalkosten durch Automatisierung und Überwachung von Prozessen zu reduzieren.

In der EP 2 684 166 B1 wird für diesen Zweck ein automatisiertes Passagierkontrollsystem vorgeschlagen, bei dem Passagiere ihr Gepäck in einem Gepäckaufgabebereich in einen Ladungsträger aufgeben, wobei eine persönliche Kennung des Passagiers erfasst und mit dem Ladungsträger verknüpft wird. Während das Gepäck eine bildgebende Gepäckkontrolle durchläuft, unterziehen sich die Passagiere einer Personenkontrolle. Anschließend begeben sich die Passagiere in einen Gepäckabholbereich, wo der mit der persönlichen Kennung verknüpfte Ladungsträger zum Entleeren bereitgestellt wird.

Die WO 2020/249192 A1 offenbart ebenfalls ein automatisiertes Sicherheitskontrollsystem, das nach dem Gepäckabholbereich eine Kontrollvorrichtung vorsieht, die dazu ausgebildet ist, den Beladungszustand und den Verschmutzungsgrad eines Ladungsträgers festzustellen.

Die WO 2020/021580 A1 betrifft eine Vorrichtung zur automatischen Überprüfung eines Gepäckstücks, wobei die Abmessungen des Gepäckstücks mit Hilfe eines 3D-Modells des Gepäckstücks ermittelt werden.

Die EP 1 981 787 B1 beschreibt eine Kontrollstation zur Überprüfung von Handgepäck mit einem sich durch ein Kontrollgerät erstreckenden Förderer, einer vor dem Förderer angeordneten Auflagestelle und einer hinter dem Fördere angeordneten Entnahmestelle für von Personen mitgeführten Gegenständen und mit auf dem Förderer aufsetzbaren Transportwannen. Außerdem ist ein Rückförderer für die Transportwannen vorgesehen, der sich von der Entnahmestelle des Förderers bis in den Bereich der Auflagestelle vor dem Förderer erstreckt.

In der US 2005/0193648 A1 wird ein Sicherheitskontrollsystem mit einer Kontrolleinheit und einer Fördereinheit zum Transport von mit Gepäck beladenen Behältern durch die Kontrolleinheit beschrieben. Für den Rücktransport der leeren Behälter ist neben der Kontrolleinheit eine Behälterrutsche vorgesehen.

US 2012/0066158 A1 beschreibt eine Diebstahlsicherung während der Sicherheitskontrolle von Handgepäck, bei welcher der Passagier sein Handgepäck in einen bereitgestellten Container legt, der dann verschlossen wird, bevor der Container durchleuchtet und anschließend in einem Abholbereich wieder bereitgestellt wird.

Die US 7 415 094 B2 betrifft einen sich durch einen Scanner erstreckenden Förderer zur Förderung von Behältern mit aufgegebenem Handgepäck von einer Aufgabestelle durch den Scanner zu einer dahin angeordneten Entnahmestelle. Die leeren Behälter werden unterhalb des Scanners auf einem Rückförderer zur Aufgabestelle zurücktransportiert.

Der Erfindung liegt nun die Aufgabe zugrunde, die Effizienz der Sicherheitskontrolle weiter zu steigern.

Erfindungsgemäß wird dies Aufgabe durch die Merkmale der Ansprüche 1 und 14 gelöst.

Das erfindungsgemäße Sicherheitskontrollsystem besteht im Wesentlichen aus
- einem Gepäckaufgabebereich mit ein oder mehreren Abgabestationen zur Aufgabe von Gepäck einer Person in wenigstens einen Ladungsträger,
- einer Gepäckkontrollstation zur bildgebenden Untersuchung des Gepäcks,
- einem Gepäckabholbereich mit ein oder mehreren Entnahmestationen und
- einem Transportsystem für den Transport der mit Gepäck beladenen Ladungsträger vom Gepäckaufgabebereich über die Gepäckkontrollstation zum Gepäckabholbereich und für den Rücktransport von leeren Ladungsträgern zum Gepäckaufgabebereich,
wobei in den vorhandenen Abgabestationen jeweils wenigstens eine erste Überwachungseinrichtung zur Erkennung der Einhaltung eines vorgegebenen Beladungsmaßes der Ladungsträger als deren Beladungszustand vorgesehen ist und/oder in den vorhandenen

Entnahmestationen jeweils wenigstens eine zweite Überwachungseinrichtung zur Erkennung eines nicht vollständig entleerten Ladungsträgers als dessen Beladungszustand vorgesehen ist.

Das erfindungsgemäße Sicherheitskontrollverfahren ist durch folgende Verfahrensschritte gekennzeichnet:
- eine Person gibt in einem Gepäckaufgabebereich mit ein oder mehreren Abgabestationen ihr Gepäck in wenigstens einen an einer Abgabestation bereitgestellten Ladungsträger auf,
- das Gepäck wird in einer Gepäckkontrollstation einer bildgebenden Untersuchung unterzogen,
- die Person holt ihr Gepäck in einem Gepäckabholbereich mit ein oder mehreren Entnahmestationen ab und
- die mit Gepäck beladenen Ladungsträger werden vom Gepäckaufgabebereich über die Gepäckkontrollstation zum Gepäckabholbereich transportiert und die entleeren Ladungsträger werden zum Gepäckaufgabebereich zurücktransportiert.

Weiterhin wird in den vorhandenen Abgabestationen jeweils mittels wenigstens einer ersten Überwachungseinrichtung die Einhaltung eines vorgegebenen Beladungsmaßes Ladungsträgers als dessen Beladungszustand überwacht und/oder in den vorhandenen Entnahmestationen jeweils mittels wenigstens einer zweiten Überwachungseinrichtung ein nicht vollständig entleerter Ladungsträger als dessen Beladungszustand erkannt.

Für die bildgebende Untersuchung des Gepäcks in der Gepäckkontrollstation kommen vielfach noch herkömmliche Röntgengeräte zum Einsatz, die zunehmend durch die wesentlich effektiveren Computertomographen ersetzt werden. In beiden Fällen weisen die Geräte begrenzte Eingangsöffnungen auf, sodass ein korrekter Beladungszustand der Ladungsträger (Transportkisten) zu beachten ist, um den reibungslosen Transport der mit dem Gepäck beladenen Ladungsträger durch die Gepäckkontrollstation zu gewährleisten. Erfindungsgemäß wird der Beladungszustand daher bereits in jeder Abgabestation überwacht, um dadurch die Person, die ihr Gepäck gerade aufgibt, frühzeitig auf eine falsche Beladung aufmerksam zu machen, um so die Person zu einer korrekten Beladung zu veranlassen. In entsprechender Art und Weise ist die zweite Überwachungseinrichtung ebenfalls in jeder Entnahmestation vorgesehen, um die an der Entnahmestation stehende Person darauf aufmerksam zu machen, wenn beispielsweise noch nicht alle Gegenstände aus dem Ladungsträger entnommen wurden. Wird der Ladungsträger durch die zweite Überwachungseinrichtung als leer erkannt, kann außerdem der Abtransport des Ladungsträgers automatisiert eingeleitet werden, wodurch vermieden wird, dass die Passagiere nach dem Entnehmen ihrer Gegenstände den Entnahmeprozess manuell beenden müssen.

Weitere Ausgestaltungen der Erfindung sind Gegenstand der Unteransprüche.

Die erste Überwachungseinrichtung in den Abgabestationen könnte auch zur Dokumentation des Ladungsträgerinhalts verwendet werden. Hierbei kann beispielsweise überwacht werden, dass das Gepäck nicht über die Ausmaße des Ladungsträgers hinausragt. Es könnte aber auch innerhalb des Ladungsträgers eine Markierung vorgesehen sein, welche die maximale Beladungsgrenze vorgibt, wobei die erste Überwachungseinrichtung überwacht, dass die maximale Beladungsgrenze nicht überschritten wird. Die erste Überwachungseinrichtung kann aber auch so ausgebildet sein, dass sie abgegebene Gegenstände erkennt und könnte dadurch bei der Abgabe nach typischen Gegenständen, wie Handy, Schlüssel, Gürtel, etc, fragen, wenn sich diese noch nicht im Ladungsträger befinden.

Es ist auch denkbar, dass die erste Überwachungseinrichtung die Beladung erkennt und Tipps zum Anordnen der einzelnen Gegenstände gibt, um ein möglichst effizientes Verstauen zu ermöglichen. Außerdem kann die erste Überwachungseinrichtung dazu ausgebildet sein, verbotene Gegenstände, wie Flüssigkeiten oder Waffen, zu erkennen und darauf hinzuweisen oder eine Mitteilung an einen Sicherheitsmitarbeiter zu veranlassen. Außerdem könnten Tiere oder Babys erkannt und gemeldet werden.

Die zweite Überwachungseinrichtung dient insbesondere zur Überwachung des Entnahmeprozesses, um rechtzeitig anzuzeigen, dass sich noch Gegenstände im Ladungsträger befinden. Dies könnte beispielsweise in geeigneter Weise akustisch oder visuell angezeigt werden.

Für die erste und zweite Überwachungseinrichtung kommen jede geeignete Detektoreinrichtung und insbesondere eine Kamera in Betracht.

Gemäß einer bevorzugten Ausgestaltung der Erfindung umfasst die erste und/oder zweite Überwachungseinrichtung eine Informationseinrichtung zur visuellen und/oder akustischen Wiedergabe eines Hinweises bezüglich des Beladungszustandes des Ladungsträgers. So kann in der Abgabestation auf einen unerwünschten Beladungszustand, insbesondere ein über eine vorgegebene Markierung hinausragendes Gepäckstück aufmerksam gemacht werden. Die visuelle Wiedergabe eines Hinweises könnte beispielsweise durch farbiges Licht erfolgen. So könnte der Ladungsträger bei den Abgabestationen zunächst grün ausgeleuchtet werden, wobei die Beleuchtung auf Rot wechselt, sobald ein unerwünschter Beladungszustand erreicht wird. Darüber hinaus kann auch zusätzlich oder alternativ ein geeigneter Hinweis auf einer Anzeige oder ein aufleuchtendes Icon kommuniziert werden.

Bei den Entnahmestationen kann insbesondere auf einen noch nicht vollständig entleerten Ladungsträger hingewiesen werden. Auch hier ist eine visuelle Wiedergabe eines Hinweises durch farbiges Licht denkbar, wobei der Ladungsträger bei den Entnahmestationen zunächst rot ausgeleuchtet wird und die Beleuchtung auf Grün wechselt, sobald der letzte Gegenstand entnommen wurde. Ein geeigneter Hinweis auf einer Anzeige oder ein aufleuchtendes Icon wäre aber auch zusätzlich oder alternativ denkbar.

Weiterhin kann die erste Überwachungseinrichtung mit dem Transportsystem und/oder einem Bereitstellungssystem gekoppelt werden, um den Abtransport eines Ladungsträgers während der Abgabe des Gepäcks und/oder im Falle eines unerwünschten Beladungszustandes des Ladungsträgers blockieren.

Im Gepäckaufgabebereich oder jeder Abgabestation kann optional ein blockierbarer Personenausgang vorgesehen werden, der bei Erkennung eines unerwünschten Beladungszustandes, beispielsweise eines über die Ausmaße des Ladungsträgers herausragenden Gepäcks, blockierbar ist. Auf diese Weise kann die Person nochmal selbst die korrekte Beladung des Ladungsträgers vornehmen, da ansonsten der Ladungsträger nicht abtransportiert werden könnte und die Abholstation somit nicht für die nächste Person zur Verfügung steht.

Der Ladungsträger ist vorzugsweise kastenartig und mit wenigstens einer Öffnung ausgebildet, wobei die Ausmaße des Ladungsträgers zweckmäßigerweise derart an die Eintrittsöffnung des Gepäckkontrollstation, bzw. des Computertomographen angepasst sind, dass der Ladungsträger einerseits möglichst groß ausgebildet ist und andererseits problemlos durch den Computertomographen hindurchtransportiert werden kann. Weiterhin kann optional vorgesehen werden, dass der Ladungsträger automatisiert oder durch die Person, die das Gepäck in dem Ladungsträger verstaut hat, mit einem Deckel verschlossen wird.

In den Gepäckkontrollstationen kommen vorzugsweise Computertomographen zum Einsatz, die sich gegenüber herkömmlichen Röntgengeräten durch eine deutlich größere der Eintrittsöffnung auszeichnen, sodass die Ladungsträger größer ausgebildet und mit mehr Gepäck beladen werden können, wodurch meist ein Ladungsträger pro Person ausreicht. Darüber ist die bildliche Darstellung für die Untersuchung des Gepäcks deutlich verbessert. Bei Computertomographen, welche nach dem sogenannten C3 Standard zertifiziert sind, können auch größere elektronische Geräte wie Laptops, Tablets oder Kameras ebenso wie Flüssigkeiten während der Gepäckkontrolle im Handgepäck verbleiben, wodurch die Aufgabe des Gepäcks in den Ladungsträger vereinfacht ist und schneller vonstattengeht.

Gemäß der bevorzugten Ausführungsform der Erfindung ist in jeder Abgabestation eine erste Identifikationseinrichtung zur Erfassung einer persönlichen Kennung, insbesondere biometrischer Merkmale, der Person vorgesehen, die mit einer Datenverarbeitungseinrichtung zur Verknüpfung der persönlichen Kennung der Person mit dem Ladungsträger, in dem sich das Gepäck der Person befindet, zusammenwirkt. An jeder Abgabestation kann somit eine persönliche Kennung der Person mittels der ersten Identifikationseinrichtung erfasst werden, wobei die persönliche Kennung der Person mittels der Datenverarbeitungseinrichtung mit dem Ladungsträger, in dem sich das Gepäck der Person befindet, verknüpft wird.

Auf diese Weise erfolgt eine eindeutige Zuordnung des mit dem Gepäck beladenen Ladungsträgers mit der Person, der das Gepäck gehört. Die erste Identifikationseinrichtung kann entweder zur erstmaligen Erfassung der persönlichen Kennung der Person ausgebildet sein oder sie wird zur Identifizierung der Person verwendet, wenn die persönliche Kennung im System bereits hinterlegt ist. So könnte die persönliche Kennung einer Person beispielsweise bereits beim Betreten des Flughafengebäudes oder bei der Abgabe des Großgepäcks erfasst werden. Es ist auch denkbar, dass die Person ihre persönliche Kennung im Vorfeld einer Reise, beispielsweise mit einem Smartphone, selbst erzeugt und an die Fluggesellschaft hochlädt. Neben den biometrischen Merkmalen der Person wären auch andere persönliche Kennungen, wie beispielsweise ein Code auf der Bordkarte denkbar. Biometrische Merkmale haben jedoch den Vorteil, dass sie auf einfache Art und Weise mit einer Kamera erfasst werden können und es somit nicht erforderlich ist, dass die Person die Bordkarte oder einen anderen Token einlesen lässt.

Hat die Person ihr Gepäck im bereitgestellten Ladungsträger verstaut kommen insbesondere folgende Möglichkeiten zur Beendigung des Prozesses in Betracht:
So könnte die Person über eine Eingabeeinheit den Abschluss der Aufgabe des Gepäcks in den Ladungsträger bestätigen, woraufhin der Ladungsträger abtransportiert wird. Es wäre aber auch denkbar, dass die Person den Abschluss der Aufgabe des Gepäcks durch Schließen einer Abdeckung des Ladungsträgers signalisiert, woraufhin der Ladungsträger abtransportiert wird. Schließlich wäre es auch denkbar, dass die erste Überwachungseinrichtung Gepäck im Ladungsträger erkennt und eine Sensoreinheit, die beispielsweise durch die erste Identifikationseinheit gebildet wird, feststellt, dass sich über einen vorgegebenen Zeitraum keine Person mehr an der Abgabestation befindet, woraufhin der Ladungsträger abtransportiert wird.

Des Weiteren kann im Gepäckabholbereich wenigstens ein Puffer für mehrere mit Gepäck beladene Ladungsträger vorgesehen werden, wobei jedem Puffer mehrere der Entnahmestationen zugeordnet sind, und ein Bereitstellungssystem zum Transfer eines mit Gepäck beladenen Ladungsträgers aus dem Puffer zu einer der Entnahmestationen vorgesehen werden. Die Personen müssen sich daher nicht zu einer bestimmten Entnahmestation begeben, sondern können die Entnahmestation frei wählen, die als nächstes frei wird. Je nach Anzahl der vorhandenen Entnahmestationen kann der Person jedoch vorgegeben werden, dass sie sich in eine bestimmte Zone des Gepäckabholbereichs begibt, wobei jeder Zone eine Vielzahl von Abholstationen zugeordnet sind.

Damit der richtige Ladungsträger bereitgestellt wird ist jede Entnahmestation vorzugsweise mit einer zweiten Identifikationseinheit zur Erfassung der persönlichen Kennung der vor der Entnahmestation stehenden Person ausgestattet, wobei die zweite Identifikationseinheit mit dem Bereitstellungssystem verknüpft ist, um den mit der persönlichen Kennung der Person verknüpften Ladungsträger an diese Entnahmestation zu transferieren. Weiterhin können an den vorhandenen Entnahmestationen Eingabe- und/oder Ausgabeeinheiten, insbesondere Monitore und Lautsprecher, vorgesehen werden, die zur Bereitstellung von Informationen an die Person und/oder zur Bestätigung des Entleerungsvorgangs des Ladungsträgers durch die Person ausgebildet sind. Über die Eingabe- und/oder Ausgabeeinheiten kann die Person insbesondere darauf aufmerksam gemacht werden, dass sich noch Gepäckstücke/Gegenstände im Ladungsträger befinden. Über eine entsprechende Erkennungssoftware könnten Personen gezielt auf einen vergessenen Gegenstand hingewiesen werden, indem beispielsweise der Hinweis erfolgt: "Bitte entnehmen Sie noch ihr Handy". Nach der vollständigen Entnahme kann dann, beispielsweise ein guter Flug gewünscht und/oder das Abfluggate angezeigt werden, sofern diese Information vorhanden ist. Eine weitere Option wäre aber auch die Einspielung von Werbung, wodurch eine zusätzliche Einnahmequelle erschlossen wird.

In einer vorteilhaften Ausgestaltung kann an den vorhandenen Entnahmestationen eine Sensoreinheit, die beispielsweise durch die zweite Identifikationseinheit gebildet wird, vorgesehen werden, die dazu ausgebildet ist, das Vorhandensein einer vor der Entnahmestation befindlichen Person festzustellen, und die mit der zweiten Überwachungseinheit und dem Bereitstellungssystem derart verknüpft ist, dass der Entleerungsprozess durch Abtransport des entleerten Ladungsträgers abgeschlossen wird, wenn die Sensoreinheit keine Person vor der Entnahmestation erkennt und der Ladungsträger leer ist. Auf diese Weise kann die Entnahmestation schnellstmöglich für die nächste Person zur Verfügung gestellt werden.

Natürlich ist es auch vorstellbar, dass die Person nach dem Entleeren des Ladungsträgers an der Entnahmestation den Entleerungsprozess durch eine Eingabe an einer Eingabeeinheit oder durch Schließen eines Deckels bzw. Abdeckung abschließt und der Ladungsträger daraufhin abtransportiert wird.

Im Rahmen der Erfindung kann der Gepäckabholbereich auch einen Nachkontrollbereich für in der Gepäckkontrollstation beanstandetes Gepäck aufweisen, wobei vorzugsweise wenigstens eine der oben beschriebenen Entnahmestationen im Nachkontrollbereich vorgesehen ist. Bei den Nachkontrollstationen kann aber ggf. auf eine erneute Identifikation verzichtet werden.

Des Weiteren kann das Transportsystem zur Ausschleusung von nicht komplett entleerten und/oder verschmutzen Ladungsträgern ausgebildet sein, um zu verhindern, dass derartige Ladungsträger an eine der Abgabestationen gelangen. Derartige Ladungsträger werden dann zu einer Service- oder einer Lost&Found-Station transferiert. Da die Ladungsträger mit der persönlichen Kennung der zugehörigen Person verknüpft sind, kann die zugehörige Personen gezielt ausgerufen und zur Lost&Found-Station gebeten werden.

Im Rahmen der Erfindung wäre es aber auch denkbar, dass verschmutze und/oder nicht komplett entleerte Ladungsträger zu einem freien Nachkontrollplatz transportiert werden und dort von einem Mitarbeiter gereinigt werden könnten, bzw. der Passagier die vergessenen Gegenstände dort abholen kann. Hier bestünde auch die Möglichkeit, dass der nicht komplett entleerte Ladungsträger im Puffersystem des Nachkontrollbereichs verweilt und dann bereitgestellt wird, wenn der richtige Passagier erscheint.

Bei den herkömmlichen Abgabe- und Entnahmestationen findet die Abgabe und das Abholen des Gepäcks im Beisein eines Sicherheitspersonal statt. Mit dem oben beschriebenen System/Verfahren ist es nicht mehr erforderlich, dass an jeder Abgabe- oder Entnahmestation ein Sicherheitspersonal anwesend ist. Es reicht vielfach aus, dass das Sicherheitspersonal jeweils für mehrere Abgabe- oder Entnahmestation zuständig ist. Das erfindungsgemäße System/Verfahren zeichnet sich somit auch durch eine enorme Personaleinsparung aus, da die Abgabe- und Entnahmestationen mit wenig, bis gar keinem Personal auskommen. Auch bei einer manuellen Nachkontrolle braucht jeder Nachkontrollplatz lediglich einen Kontrolleur, wobei es auch denkbar wäre, dass ein Kontrolleur zwei Nachkontrollplätze bedient.

Weitere Ausgestaltungen und Vorteile der Erfindung werden anhand der nachfolgenden Beschreibung und der Zeichnungen näher erläutert.

In der Zeichnung zeigen
- Fig.1: ein Blockschaltdiagramm des Sicherheitskontrollsystems,
- Fig.2: eine schematische Detailansicht des Gepäckaufgabebereichs mit einer Abgabestation und
- Fig.3: eine schematische Detailansicht des Gepäckabholbereichs mit einer Entnahmestation

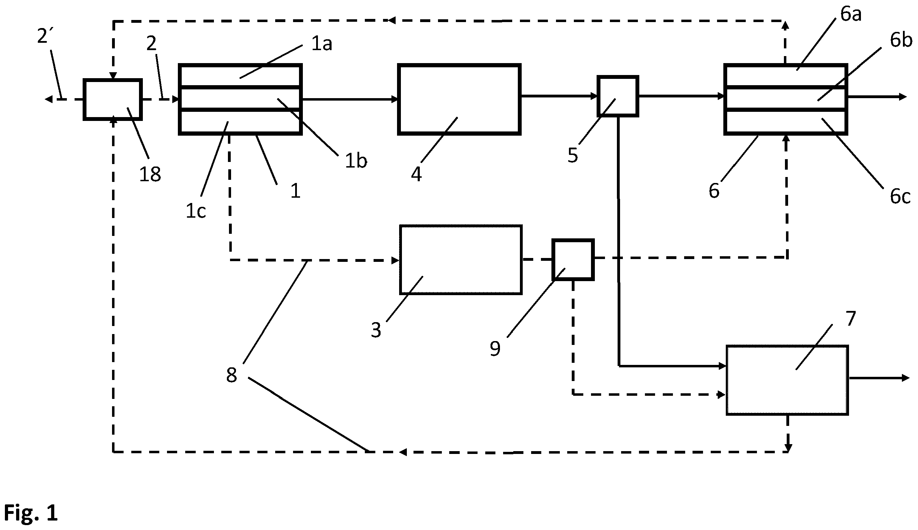

Fig. 1 zeigt ein als Blockschaltdiagramm dargestelltes Ausführungsbeispiel für ein erfindungsgemäßes Sicherheitskontrollsystem. Es sieht einen Gepäckaufgabebereich 1 mit ein oder mehreren Abgabestationen 1a, 1b, 1c zur Abgabe von Gepäck in einen Ladungsträger 2 vor. Der mit Gepäck beladende Ladungsträger 2 wird einer Gepäckkontrollstation 3 zur bildgebenden Untersuchung des Gepäcks zugeführt, wobei dort vorzugsweise ein Computertomograph zum Einsatz kommt.

Während der Gepäckuntersuchung begibt sich die Person zu einer Personenkontrollstation 4. Hierbei können beispielsweise Metalldetektoren und Bodyscan-Einrichtungen sowie weitere Einrichtungen zum Einsatz kommen.

Die Personenkontrollstation 4 weist vorzugsweise Anstell- und Wegsysteme auf, die eine Synchronisation zwischen Gepäckstatus und Personenkontrolle gezielt steuern können. So erhält die Person nach erfolgter Personenkontrolle an einer Informationseinrichtung 5 die Information, ob sie sich zu einem Gepäckabholbereich 6 mit ein oder mehreren Entnahmestationen 6a, 6b, 6c zum Empfang und Entleeren des der Person zugeordneten Ladungsträgers oder zu einem Nachkontrollbereich 7 zur manuellen Nachkontrolle ihres Gepäcks begeben soll. Die Personenwege sind mit durchgezogenen Pfeilen veranschaulicht.

Mit gestrichelten Pfeilen ist ein Transportsystem 8 für den Transport der Ladungsträger 2 vom Gepäckaufgabebereich 1 über die Gepäckkontrollstation 3 zum Gepäckabholbereich 6 bzw. zum Nachkontrollbereich 7 und für den Rücktransport von leeren Ladungsträgern zum Gepäckaufgabebereich 1 dargestellt. Nach der Gepäckkontrollstation 3 ist eine Weiche 9 vorgesehen, um das in der Gepäckkontrollstation 3 beanstandete Gepäck zum Nachkontrollbereich 7 abzuzweigen. Bis zur Weiche muss der Bediener der Gepäckkontrollstation (CT-Gerät) seine Entscheidung getroffen haben, ob eine Nachkontrolle erforderlich ist. Sollte keine Entscheidung rechtzeitig getroffen werden, dann wird der Ladungsträger 2 automatisch zum Nachkontrollbereich 7 gefördert, damit es auf der Strecke zum Gepäckabholbereich 6 nicht zu einer Vermischung von beanstandeten und nicht beanstandeten Gepäckstücken kommt.

Im Bereich der Rücktransportstrecke ist eine Einrichtung 18 zur Ausschleusung von nicht komplett entleerten und/oder verschmutzen Ladungsträgern 2' vorgesehen. Während die verschmutzten Ladungsträger einer nicht näher dargestellten Servicestation gelangen, werden die nicht vollständig entleerten Ladungsträger einer Lost&Found-Station zugeführt. Da die Ladungsträger mit der persönlichen Kennung der zugehörigen Person verknüpft sind, kann die zugehörige Personen dann gezielt ausgerufen und zur Lost&Found-Station gebeten werden.

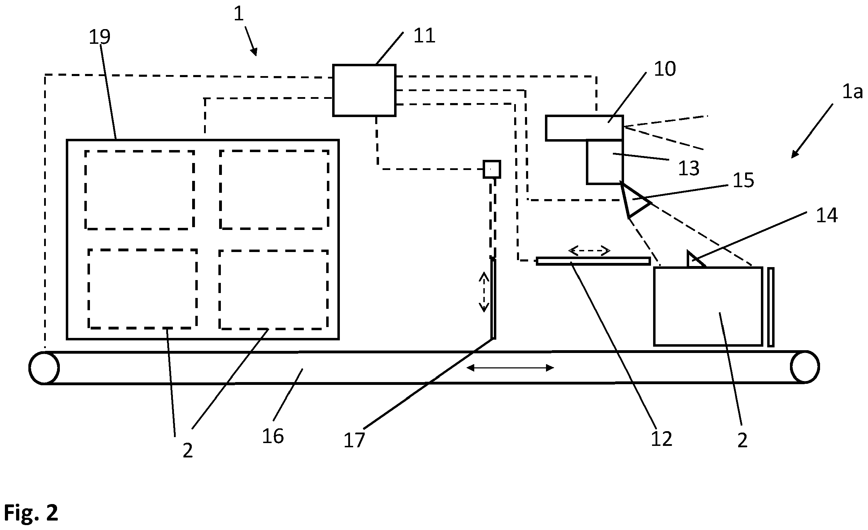

Anhand von Fig. 2 wird nachfolgend der Gepäckaufgabebereich 1 am Beispiel der Abgabestation 1a näher beschrieben. So weist die Abgabestation 1a eine erste Identifikationseinrichtung 10 zur Erfassung einer persönlichen Kennung (insbesondere biometrische Merkmale) der Person auf, die vorzugsweise als Kamera ausgebildet ist. Die persönliche Kennung der Person, wird mittels einer Datenverarbeitungseinrichtung 11 mit dem an der Abgabestation 1a bereitgestellten Ladungsträger 2 verknüpft, in dem eine am Ladungsträger angebrachte Kennzeichnung mit einem nicht näher dargestellten Lesegerät ausgelesen und mit der persönlichen Kennung der Person verknüpft wird. Die Kennzeichnung am Ladungsträger kann beispielsweise durch ein RFID, einen QR-Code oder ein ähnliches Kennzeichen gebildet werden.

Sobald die persönliche Kennung der Person erfasst ist, öffnet sich eine Abdeckung 12, die den Ladungsträger zum Beladen freigibt. Der Ladungsträger ist im dargestellten Ausführungsbeispiel kastenartig und nach oben offen ausgebildet. Die Person kann dann ihr Gepäck im Ladungsträger verstauen, wobei über eine erste Informationseinrichtung 13, die insbesondere einen Monitor und einen Lautsprecher umfasst, visuelle und/oder akustische Hinweis für die Person gegeben werden können. So kann insbesondere darauf hingewiesen werden, dass eine bestimmte maximale Beladungsgrenze nicht überschritten werden darf. Hierzu kann der Ladungsträger eine entsprechende Markierung aufweisen. Es ist aber auch denkbar, dass der Ladungsträger 2 so beladen werden darf, dass das Gepäck 14 nicht über die Ausmaße des Ladungsträgers 2 hinausragt.

Eine erste Überwachungseinrichtung 15, die beispielsweise durch eine Kamera gebildet wird, erkennt den Beladungszustand des Ladungsträgers 2, wobei im Falle eines unerwünschten Beladungszustands über die erste Informationseinrichtung 13 ein entsprechender Hinweis erfolgt. Nachdem das Gepäck 14 im dargestellten Beispiel über die Ausmaße des Ladungsträgers 2 herausragt, könnte die Person dazu aufgefordert werden, das Gepäck richtig einzulegen oder einen zweiten Ladungsträger anzufordern. Des Weiteren besteht die Möglichkeit, Hilfe durch einen Mitarbeiter anzufordern, wenn eine Person nicht zurechtkommt.

Ist das Gepäck ordnungsgemäß im Ladungsträger 2 verstaut, kann der Gepäckabgabeprozess dadurch automatisiert abgeschlossen werden, dass eine Überprüfung, insbesondere nach einer vorgegebenen Zeit, ergibt, dass sich keine Person mehr an der Abgabestation 1a befindet, sodass ein automatisierter Abtransport des Ladungsträgers 2 in Gang gesetzt werden kann. Es könnte aber auch vorgesehen werden, dass die Person den Ladungsträger mit einer Abdeckung oder einem Deckel verschließt, wobei ein etwaiger Deckel des Ladungsträgers auch automatisiert abgehoben und aufgesetzt werden könnte. Alternativ könnte der Abschluss auch durch Betätigung einer Taste oder in ähnlicher Art und Weise abgeschlossen werden. Sollte die Person ohne Bestätigung die Abholstation verlassen, könnte sie über die erste Informationseinrichtung 13 zur Bestätigung aufgefordert werden. Sollte sich die Person dennoch entfernen, was ggf. durch einen blockierbaren Personenausgang verhindert werden könnte, kann nach Ablauf einer vorgegebenen Zeit auch ein automatischer Abtransport in Gang gesetzt werden.

Für den Abtransport schließt zunächst die Abdeckung 12 und/oder ein Tor 17 öffnet sich, um den Abtransport des Ladungsträgers 2 freizugeben. Der Transport des Ladungsträgers 2 erfolgt über das Transportsystem 8 und/oder ein mit dem Transportsystem 8 in Verbindung stehendes Bereitstellungssystem 16, wobei die erste Überwachungseinrichtung 15 mit dem Bereitstellungssystem 16 und/oder dem Transportsystem 8 derart gekoppelt ist, dass der Abtransport des Ladungsträger 2 aus der Abgabestation 1a blockiert wird (Tor 17 bleibt geschlossen), wenn ein unerwünschter Beladungszustand des Ladungsträgers 2 festgestellt wird. Der mit Gepäck beladene Ladungsträger 2 wird dann der Gepäckkontrollstation 3 zugeführt, während sich die Person zu Personenkontrollstation 4 begibt.

Der Abgabestation 1a ist ein Pufferbereich 19 für rückgeführte, leere Ladungsträger 2 zugeordnet, wobei in der Abgabestation 1c der nächste leere Ladungsträger über das Transportsystem 8 oder das Bereitstellungsystem 16 bereitgestellt wird.

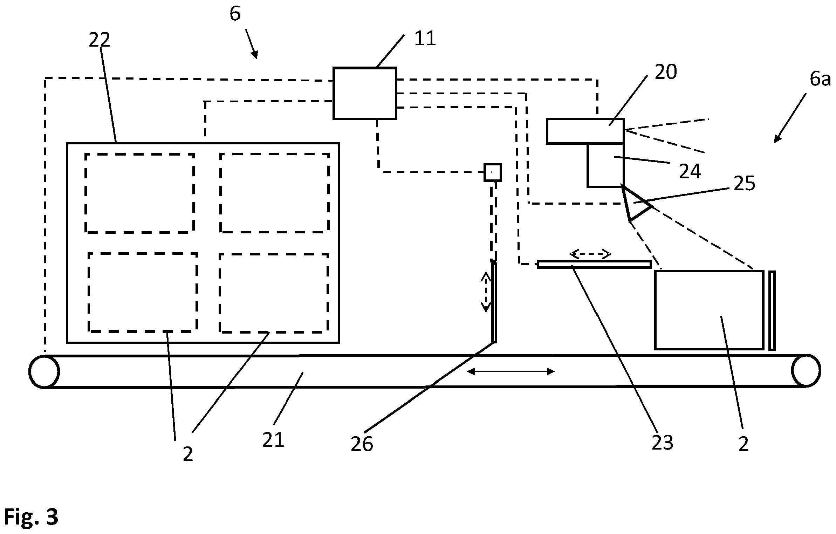

Im Folgenden wird anhand der Fig. 3 der Gepäckabholbereich 6 am Beispiel der Entnahmestation 6a näher erläutert.

Die Entnahmestation 6a kann grundsätzlich ähnlich oder identisch zur Abgabestation 1a aufgebaut werden. So weist die Entnahmestation 6a eine zweite Identifikationseinrichtung 20 zur Erfassung der persönlichen Kennung der vor der Entnahmestation stehenden Person auf, wobei die zweite Identifikationseinheit 20 mit einem zweiten Bereitstellungssystem 21 verknüpft ist, um den mit der persönlichen Kennung der Person verknüpften Ladungsträger 2 an diese Entnahmestation 6a zu transferieren. Der Gepäckabholbereich 6 weist hierzu wenigstens einen Puffer 22 für mehrere mit Gepäck beladene Ladungsträger 2 auf, wobei dem Puffer 22 mehrere der Entnahmestationen, also beispielsweise die Entnahmestationen 6a, 6b und 6c zugeordnet sind. Das zweite Bereitstellungssystem 21 ist zum Transfer der mit Gepäck beladenen Ladungsträger 2 aus dem Puffer 22 zu einer der Entnahmestationen 6a, 6b, 6c ausgebildet, wobei der Puffer 22 - unabhängig von der Reihenfolge, in welcher die Ladungsträger 2 in den Puffer 22 eingebracht worden sind - in der Lage ist, die Ladungsträger 2 in beliebiger Reihenfolge zu jeder der zugeordneten Abholstationen zu transferieren. Die Person, die ihr Gepäck abholen will, kann sich daher an eine beliebige Entnahmestation 6a, 6b, 6c begeben, die gerade frei ist und wird dort von der zweite Identifikationseinrichtung 20 identifiziert, sodass der mit ihrer persönlichen Kennung verknüpfte Ladungsträger 2 aus dem Puffer 22 an diese Entnahmestation transferiert wird.

Sobald der zugehörige Ladungsträger 2 in der Entnahmestation bereitgestellt ist, öffnet sich eine Abdeckung 23, die den Ladungsträger 2 zum Entladen zugänglich macht. Über eine Eingabe- und/oder Ausgabeeinheit 24 können Informationen an die Person bereitgestellt werden. Eine zweite Überwachungseinrichtung 25, die beispielsweise durch eine Kamera gebildet wird, erkennt den Beladungszustand des Ladungsträgers 2. Über die Eingabe- und/oder Ausgabeeinheit 24 kann die Person, insbesondere darauf aufmerksam gemacht werden, dass sich noch Gepäckstücke/Gegenstände im Ladungsträger 2 befinden. Nach der vollständigen Entnahme kann dann, beispielsweise ein guter Flug gewünscht und/oder das Abfluggate angezeigt werden.

In einer vorteilhaften Ausgestaltung ist an den vorhandenen Entnahmestationen eine Sensoreinheit, die beispielsweise durch die zweite Identifikationseinheit 20 gebildet wird, vorgesehen, die dazu ausgebildet ist, das Vorhandensein einer vor der Entnahmestation befindlichen Person festzustellen, und die mit der zweiten Überwachungseinheit 25 und dem zweiten Bereitstellungssystem 21 derart verknüpft ist, dass der Entleerungsprozess durch Abtransport des entleerten Ladungsträgers 2 abgeschlossen wird, wenn die Sensoreinheit keine Person vor der Entnahmestation 6a erkennt und der Ladungsträger 2 leer ist. Auf diese Weise kann die Entnahmestation schnellstmöglich für die nächste Person zur Verfügung gestellt werden.

Ist der Entnahmeprozess beendet, schließt zunächst die Abdeckung 23 und/oder ein Tor 26 öffnet sich, um den Abtransport des Ladungsträgers 2 freizugeben. Der Transport des Ladungsträgers 2 erfolgt über das zweite Bereitstellungssystem 21 und/oder das Transportsystem 8, wobei die zweite Überwachungseinrichtung 25 mit dem zweiten Bereitstellungssystem 21 und/oder dem Transportsystem 8 derart gekoppelt ist, dass der Abtransport des Ladungsträgers 2 aus der Entnahmestation 1a blockiert wird (Tor 26 bleibt geschlossen), wenn sich noch ein Gegenstand im Ladungsträger 2 befinden sollte. Sollte der Ladungsträger 2 leer sein wird der Rücktransport zum Gepäckaufgabebereich 1 eingeleitet. Alsdann kann der nächste Entnahmeprozess eingeleitet werden, indem die nächste, vor der Entnahmestation stehende Person von der zweiten Identifikationseinrichtung 20 erfasst wird.

Gemäß einer bevorzugten Ausgestaltung der Erfindung kann die zweite Überwachungseinrichtung 25 in den Entnahmestationen 6a, 6b, 6c auch in der Lage sein, eine Verschmutzung des Ladungsträgers 2, beispielsweise durch eine ausgelaufene Flüssigkeit, zu erkennen. Verschmutzte Ladungsträger könnten dann an der Einrichtung 18 (Fig. 1) ausgeschleust werden. Eine Ausschleusung könnte auch im Falle eines nicht oder nicht vollständig entleerten Ladungsträgers erfolgen, wenn sich die Person vor der vollständigen Entleerung von der Entnahmestation 6a, 6b, 6c entfernen sollte.

## Patentansprüche

1. Sicherheitskontrollsystem mit
- einem Gepäckaufgabebereich (1) mit ein oder mehreren Abgabestationen (1a, 1b, 1c) zur Aufgabe von Gepäck einer Person in wenigstens einen Ladungsträger (2),
- einer Gepäckkontrollstation (3) zur bildgebenden Untersuchung des Gepäcks,
- einem Gepäckabholbereich (6) mit ein oder mehreren Entnahmestationen (6a, 6b, 6c),
- einem Transportsystem (8) für den Transport der mit Gepäck beladenen Ladungsträger (2) vom Gepäckaufgabebereich (1) über die Gepäckkontrollstation (3) zum Gepäckabholbereich (6) und für den Rücktransport von leeren Ladungsträgern (2) zum Gepäckaufgabebereich (1), **dadurch gekennzeichnet, dass** in den vorhandenen Abgabestationen (1a, 1b, 1c) jeweils wenigstens eine erste Überwachungseinrichtung (15) zur Erkennung der Einhaltung eines vorgegebenen Beladungsmaßes der Ladungsträger (2) als deren Beladungszustand vorgesehen ist und/oder in den vorhandenen Entnahmestationen (6a, 6b, 6c) jeweils wenigstens eine zweite Überwachungseinrichtung (25) zur Erkennung eines nicht vollständig entleerten Ladungsträgers (2) als dessen Beladungszustand vorgesehen ist.

2. Sicherheitssystem nach Anspruch 1, **dadurch gekennzeichnet, dass** die erste und/oder zweite Überwachungseinrichtung (15, 25) wenigstens eine Detektoreinrichtung und/oder wenigstens eine Kamera aufweist.

3. Sicherheitskontrollsystem nach Anspruch 1, **dadurch gekennzeichnet, dass** die erste und/oder zweite Überwachungseinrichtung (15, 25) eine Informationseinrichtung (13) und/oder eine Eingabe- und/oder Ausgabeeinheit (24) umfasst, die zur visuellen und/oder akustischen Wiedergabe eines Hinweises im Falle eines unerwünschten Beladungszustandes des Ladungsträgers (2) in der Abgabestation (1a, 1b, 1c) und/oder eines nicht vollständig entleerten Ladungsträgers (2) in der Entnahmestation (6a, 6b, 6c) ausgebildet ist.

4. Sicherheitskontrollsystem nach Anspruch 1, **dadurch gekennzeichnet, dass** die erste Überwachungseinrichtung (15) mit dem Transportsystem (8) und/oder einem Bereitstellungssystem (16) gekoppelt ist und zur Blockierung des Abtransports eines Ladungsträgers (2) während der Aufgabe des Gepäcks und/oder im Falle eines unerwünschten Beladungszustandes des Ladungsträgers (2) ausgebildet ist.

5. Sicherheitskontrollsystem nach Anspruch 1, **dadurch gekennzeichnet, dass** an jeder Abgabestation (1a, 1b, 1c) eine erste Identifikationseinrichtung (10) zur Erfassung einer persönlichen Kennung der Person vorgesehen ist, die mit einer Datenverarbeitungseinrichtung (11) zur Verknüpfung der persönlichen Kennung der Person mit dem Ladungsträger (2), in dem sich das Gepäck der Person befindet, zusammenwirkt.

6. Sicherheitskontrollsystem nach Anspruch 1, **dadurch gekennzeichnet, dass** der Gepäckabholbereich (6) wenigstens einen Puffer (22) für mehrere mit Gepäck beladene Ladungsträger (2) aufweist, wobei jedem Puffer (22) mehrere der Entnahmestationen (6a, 6b, 6c) zugeordnet sind, und ein Bereitstellungssystem (21) zum Transfer eines mit Gepäck beladenen Ladungsträgers (2) aus dem Puffer (22) zu einer der Entnahmestationen (6a, 6b, 6c) vorsieht.

7. Sicherheitskontrollsystem nach Anspruch 6, **dadurch gekennzeichnet, dass** jede Entnahmestation (6a, 6b, 6c) mit einer zweiten Identifikationseinheit (20) zur Erfassung der persönlichen Kennung der vor der Entnahmestation (6a, 6b, 6c) stehenden Person ausgestattet ist, wobei die zweite Identifikationseinheit (20) mit dem Bereitstellungssystem (21) verknüpft ist, um den mit der persönlichen Kennung der Person verknüpften Ladungsträger (2) an diese Entnahmestation (6a, 6b, 6c) zu transferieren.

8. Sicherheitskontrollsystem nach Anspruch 1, **dadurch gekennzeichnet, dass** das Transportsystem (8) zur Ausschleusung von nicht komplett entleerten und/oder verschmutzen Ladungsträgern (2) ausgebildet ist.

9. Sicherheitskontrollsystem nach Anspruch 1, **dadurch gekennzeichnet, dass** an den vorhandenen Entnahmestationen (6a, 6b, 6c) Eingabe- und/oder Ausgabeeinheiten (24) vorgesehen sind, die zur Bereitstellung von Informationen an die Person und/oder zur Bestätigung des Entleerungsvorgangs des Ladungsträgers (2) durch die Person ausgebildet sind.

10. Sicherheitskontrollsystem nach Anspruch 1, **dadurch gekennzeichnet, dass** an den vorhandenen Entnahmestationen (6a, 6b, 6c) eine Sensoreinheit vorgesehen ist, die dazu ausgebildet ist, das Vorhandensein einer vor der Entnahmestation (6a, 6b, 6c) befindlichen Person festzustellen, und die mit der zweiten Überwachungseinheit (25) und dem Bereitstellungssystem (21) derart verknüpft ist, dass der Entleerungsprozess durch Abtransport des entleerten Ladungsträgers (2) abgeschlossen wird, wenn die Sensoreinheit keine Person vor der Entnahmestation (6a, 6b, 6c) erkennt und der Ladungsträger leer ist.

11. Sicherheitskontrollsystem nach Anspruch 1, **dadurch gekennzeichnet, dass** der Gepäckaufgabebereich (1) oder jede Abgabestation (1a, 1b, 1c) einen blockierbaren Personenausgang vorsieht, wobei der Personenausgang bei Erkennung eines unerwünschten Beladungszustandes blockierbar ist.

12. Sicherheitskontrollverfahren, **dadurch gekennzeichnet, dass** ein Sicherheitskontrollsystem nach Anspruch 1 zum Einsatz kommt, wobei
- eine Person in einem Gepäckaufgabebereich (1) mit ein oder mehreren Abgabestationen (1a, 1b, 1c) ihr Gepäck in wenigstens einen an einer Abgabestation (1a, 1b, 1c) bereitgestellten Ladungsträger (2) aufgibt,
- das Gepäck in einer Gepäckkontrollstation (3) einer bildgebenden Untersuchung unterzogen wird,
- die Person ihr Gepäck in einem Gepäckabholbereich (6) mit ein oder mehreren Entnahmestationen (6a, 6b, 6c) abholt und
- die mit Gepäck beladenen Ladungsträger (2) vom Gepäckaufgabebereich (1) über die Gepäckkontrollstation (3) zum Gepäckabholbereich (6) transportiert werden und die entleeren Ladungsträger (2) zum Gepäckaufgabebereich (1) zurücktransportiert werden, **dadurch gekennzeichnet, dass** in den vorhandenen Abgabestationen (1a, 1b, 1c) jeweils mittels wenigstens einer ersten Überwachungseinrichtung (15) die Einhaltung eines vorgegebenen Beladungsmaßes der Ladungsträger (2) als deren Beladungszustand überwacht und/oder in den vorhandenen Entnahmestationen (6a, 6b, 6c) jeweils mittels wenigstens einer zweiten Überwachungseinrichtung (25) ein nicht vollständig entleerter Ladungsträger (2) als dessen Beladungszustand erkannt wird.

13. Sicherheitskontrollverfahren nach Anspruch 12, **dadurch gekennzeichnet, dass** an jeder Abgabestation (1a, 1b, 1c) eine persönliche Kennung der Person mittels einer ersten Identifikationseinrichtung (10) erfasst wird und die persönliche Kennung der Person mittels einer Datenverarbeitungseinrichtung (11) mit dem Ladungsträger (2), in dem sich das Gepäck der Person befindet, verknüpft wird.

14. Sicherheitskontrollverfahren, nach Anspruch 12, **dadurch gekennzeichnet**, **dadurch gekennzeichnet, dass**
- die Person über eine Eingabeeinheit den Abschluss der Aufgabe des Gepäcks in den Ladungsträger (2) bestätigt und der Ladungsträger (2) daraufhin abtransportiert wird oder
- die Person den Abschluss der Aufgabe des Gepäcks durch Schließen einer Abdeckung des Ladungsträgers (2) signalisiert, woraufhin der Ladungsträger (2) abtransportiert wird oder
- die erste Überwachungseinrichtung (15) Gepäck im Ladungsträger (2) erkennt, und eine Sensoreinheit (15) feststellt, dass sich keine Person an der Abgabestation (1a, 1b, 1c) befindet, woraufhin der Ladungsträger (2) abtransportiert wird.

15. Sicherheitskontrollverfahren, nach Anspruch 12, **dadurch gekennzeichnet, dass**
- die Person nach dem Entleeren des Ladungsträgers (2) an der Entnahmestation (6a, 6b, 6c) den Entleerungsprozess durch eine Eingabe an einer Eingabeeinheit (24) abschließt und der Ladungsträger (2) daraufhin abtransportiert wird und/oder
- der Entleerungsprozesses des Ladungsträgers (2) in einer Entnahmestation (6a, 6b, 6c) automatisiert beendet und der Ladungsträger (2) abtransportiert wird, indem die zweite Überwachungseinheit (25) einen leeren Ladungsträger (2) erkennt und eine Sensoreinheit feststellt, dass sich keine Person an der Entnahmestation (6a, 6b, 6c) befindet.

## Claims

1. Security inspection system, comprising
- a luggage drop-off region (1) having one or more drop-off stations (1a, 1b, 1c) for dropping off luggage belonging to a person into at least one load carrier (2),
- a luggage inspection station (3) for imaging inspection of the luggage,
- a luggage pick-up region (6) having one or more removal stations (6a, 6b, 6c),
- a transport system (8) for transporting the load carriers (2) laden with luggage from the luggage drop-off region (1) via the luggage inspection station (3) to the luggage pick-up region (6) and for returning empty load carriers (2) to the luggage drop-off region (1),
**characterized in that** at least one first monitoring device (15) is provided in each of the provided drop-off stations (1a, 1b, 1c) for detecting the compliance with a specified degree of loading of the load carrier (2) as its loading state, and/or at least one second monitoring device (25) is provided in each of the provided removal stations (6a, 6b, 6c) for detecting a load carrier (2) that is not completely emptied as its loading state.

2. Security system according to claim 1, **characterized in that** the first and/or second monitoring device (15, 25) has at least one detector device and/or at least one camera.

3. Security inspection system according to claim 1, **characterized in that** the first and/or second monitoring device (15, 25) comprises an information device (13) and/or an input and/or output unit (24) which is designed to visually and/or acoustically reproduce an indication in the event of an undesirable loading state of the load carrier (2) in the drop-off station (1a, 1b, 1c) and/or in the event of a load carrier (2) in the removal station (6a, 6b, 6c) that is not completely emptied.

4. Security inspection system according to claim 1, **characterized in that** the first monitoring device (15) is coupled to the transport system (8) and/or a provision system (16) and is designed to block the removal of a load carrier (2) during the dropping off of the luggage and/or in the event of an undesirable loading state of the load carrier (2).

5. Security inspection system according to claim 1, **characterized in that** at each drop-off station (1a, 1b, 1c) a first identification device (10) is provided for detecting a personal identifier of the person, which interacts with a data processing device (11) for linking the personal identifier of the person with the load carrier (2) in which the person's luggage is located.

6. Security inspection system according to claim 1, **characterized in that** the luggage pick-up region (6) has at least one buffer (22) for a plurality of load carriers (2) laden with luggage, wherein each buffer (22) is assigned a plurality of the removal stations (6a, 6b, 6c), and provides a provision system (21) for transferring a load carrier (2) laden with luggage from the buffer (22) to one of the removal stations (6a, 6b, 6c).

7. Security inspection system according to claim 6, **characterized in that** each removal station (6a, 6b, 6c) is equipped with a second identification unit (20) for detecting the personal identifier of the person standing in front of the removal station (6a, 6b, 6c), wherein the second identification unit (20) is linked to the provision system (21) in order to transfer the load carrier (2) linked to the personal identifier of the person to this removal station (6a, 6b, 6c).

8. Security inspection system according to claim 1, **characterized in that** the transport system (8) is designed to eject load carriers (2) that are not completely emptied and/or are soiled.

9. Security inspection system according to claim 1, **characterized in that** input and/or output units (24) are provided at the provided removal stations (6a, 6b, 6c), which units are designed to provide information to the person and/or to confirm the emptying process of the load carrier (2) by the person.

10. Security inspection system according to claim 1, **characterized in that** a sensor unit is provided at the provided removal stations (6a, 6b, 6c), which unit is designed to determine the presence of a person located in front of the removal station (6a, 6b, 6c), and which is linked to the second monitoring unit (25) and to the provision system (21) in such a way that the emptying process is completed by transporting away the emptied load carrier (2) if the sensor unit does not detect a person in front of the removal station (6a, 6b, 6c) and the load carrier is empty.

11. Security inspection system according to claim 1, **characterized in that** the luggage drop-off region (1) or each drop-off station (1a, 1b, 1c) provides a blockable exit for persons, wherein the exit can be blocked upon detection of an undesirable loading state.

12. Security inspection method, **characterized in that** a security inspection system according to claim 1 is used, wherein
- a person in a luggage drop-off region (1) with one or more drop-off stations (1a, 1b, 1c) drops off his or her luggage in at least one load carrier (2) provided at a drop-off station (1a, 1b, 1c),
- the luggage is subjected to an imaging examination at a luggage inspection station (3),
- the person picks up his or her luggage in a luggage pick-up region (6) having one or more removal stations (6a, 6b, 6c), and
- the load carriers (2) laden with luggage are transported from the luggage drop-off region (1) via the luggage inspection station (3) to the luggage pick-up region (6), and the empty load carriers (2) are transported back to the luggage drop-off region (1),
**characterized in that**, in each of the provided drop-off stations (1a, 1b, 1c), the loading state of the load carriers (2) is monitored by means of at least one first monitoring device (15), and/or, in each of the provided removal stations (6a, 6b, 6c), the loading state of the load carriers (2) is monitored by means of at least one second monitoring device (25).

13. Security inspection method according to claim 12, **characterized in that** at each drop-off station (1a, 1b, 1c) a personal identifier of the person is detected by means of a first identification device (10), and the personal identifier of the person is linked by means of a data processing device (11) to the load carrier (2) in which the person's luggage is located.

14. Security inspection method according to claim 12, **characterized in that**
- the person confirms via an input unit the completion of the loading of the luggage into the load carrier (2), and the load carrier (2) is then transported away, or
- the person signals the completion of the loading of the luggage by closing a cover of the load carrier (2), whereupon the load carrier (2) is transported away, or
- the first monitoring device (15) detects luggage in the load carrier (2), and a sensor unit (15) determines that there is no person at the drop-off station (1a, 1b, 1c), whereupon the load carrier (2) is transported away.

15. Security inspection method according to claim 12, **characterized in that**
- after emptying the load carrier (2) at the removal station (6a, 6b, 6c), the person completes the emptying process by making an input at an input unit (24), and the load carrier (2) is thereupon transported away, and/or
- the emptying process of the load carrier (2) in a removal station (6a, 6b, 6c) is ended in automated fashion and the load carrier (2) is transported away, by the second monitoring unit (25) detecting an empty load carrier (2) and a sensor unit determining that there is no person at the removal station (6a, 6b, 6c).

## Revendications

1. Système de contrôle de sécurité comprenant :
- une zone d'enregistrement des bagages (1), qui comprend une ou plusieurs stations de dépôt (1a, 1b, 1c) servant à l'enregistrement des bagages d'une personne dans au moins un support de charge (2),
- une station de contrôle des bagages (3) pour l'examen par imagerie des bagages,
- une zone de récupération des bagages (6), qui comprend une ou plusieurs stations d'enlèvement (6a, 6b, 6c),
- un système de transport (8) conçu pour le transport des supports de charge (2) chargés de bagages, ledit transport étant effectué à partir de la zone d'enregistrement des bagages (1) jusqu'à la zone de récupération des bagages (6) en passant par la station de contrôle des bagages (3), et conçu pour le transport de retour de supports de charge vides (2) jusqu'à la zone d'enregistrement des bagages (1),
**caractérisé en ce que**, dans les stations de dépôt existantes (1a, 1b, 1c), il est prévu à chaque fois au moins un premier dispositif de surveillance (15) servant à détecter le respect d'un niveau de charge prédéterminé des supports de charge (2) comme étant leur état de charge et/ou, dans les stations d'enlèvement existantes (6a, 6b, 6c), il est prévu à chaque fois au moins un deuxième dispositif de surveillance (25) servant à la détection d'un support de charge (2) non complètement vidé comme étant son état de charge.

2. Système de contrôle de sécurité selon la revendication 1, **caractérisé en ce que** le premier et/ou le deuxième dispositif de surveillance (15, 25) présente au moins un dispositif détecteur et/ou au moins une caméra.

3. système de contrôle de sécurité selon la revendication 1, **caractérisé en ce que** le premier et/ou le deuxième dispositif de surveillance (15, 25) comprend un dispositif d'informations (13) et/ou une unité d'entrée et/ou de sortie (24) qui est conçue pour la reproduction visuelle et/ou acoustique d'une indication dans le cas d'un état de charge indésirable du support de charge (2) dans la station de dépôt (1a, 1b, 1c) et/ou d'un support de charge (2) non complètement vidé dans la station d'enlèvement (6a, 6b, 6c).

4. Système de contrôle de sécurité selon la revendication 1, **caractérisé en ce que** le premier dispositif de surveillance (15) est couplé au système de transport (8) et/ou à un système de mise à disposition (16) et est conçu pour servir au blocage de l'évacuation d'un support de charge (2) lors de l'enregistrement des bagages et/ou dans le cas d'un état de charge indésirable du support de charge (2).

5. système de contrôle de sécurité selon la revendication 1, **caractérisé en ce qu'**il est prévu, au niveau de chaque station de dépôt (1a, 1b, 1c), un premier dispositif d'identification (10) servant à détecter un identifiant personnel de la personne, premier dispositif d'identification qui agit de façon conjointe avec un dispositif de traitement de données (11) servant à la liaison de l'identifiant personnel de la personne avec le support de charge (2) dans lequel se trouvent les bagages de la personne.

6. système de contrôle de sécurité selon la revendication 1, **caractérisé en ce que** la zone de récupération des bagages (6) présente au moins un tampon (22) pour plusieurs supports de charge (2) chargés de bagages, où plusieurs des stations d'enlèvement (6a, 6b, 6c) sont affectées à chaque tampon (22), et il est prévu un système de mise à disposition (21) servant au transfert d'un support de charge (2) chargé de bagages, depuis le tampon (22) jusqu'à l'une des stations d'enlèvement (6a, 6b, 6c).

7. Système de contrôle de sécurité selon la revendication 6, **caractérisé en ce que** chaque station d'enlèvement (6a, 6b, 6c) est dotée d'une deuxième unité d'identification (20) servant à détecter l'identifiant personnel de la personne qui se trouve devant la station d'enlèvement (6a, 6b, 6c), où la deuxième unité d'identification (20) est liée au système de mise à disposition (21), afin de transférer le support de charge (2) lié à l'identifiant personnel de la personne jusqu'à cette station d'enlèvement (6a, 6b, 6c).

8. système de contrôle de sécurité selon la revendication 1, **caractérisé en ce que** le système de transport (8) est conçu pour l'élimination de supports de charge (2) non complètement vidés et/ou encrassés.

9. système de contrôle de sécurité selon la revendication 1, **caractérisé en ce qu'**il est prévu, au niveau des stations d'enlèvement existantes (6a, 6b, 6c), des unités d'entrée et/ou de sortie (24) qui sont conçues pour fournir des informations à la personne et/ou pour assurer la confirmation du processus de déchargement du support de charge (2) par la personne.

10. Système de contrôle de sécurité selon la revendication 1, **caractérisé en ce qu'**il est prévu, au niveau des stations d'enlèvement existantes (6a, 6b, 6c), une unité de capteur, qui est conçue pour constater la présence d'une personne se trouvant devant la station d'enlèvement (6a, 6b, 6c), et qui est combinée avec la deuxième unité de surveillance (25) et avec le système de mise à disposition (21) de manière telle, que le processus de déchargement est achevé par l'évacuation du support de charge vidé (2), si l'unité de capteur ne détecte aucune personne se trouvant devant la station d'enlèvement (6a, 6b, 6c) et si le support de charge est vide.

11. Système de contrôle de sécurité selon la revendication 1, **caractérisé en ce que** la zone d'enregistrement des bagages (1) ou chaque station de dépôt (1a, 1b, 1c) prévoit une sortie, réservée aux personnes, qui peut être bloquée, où la sortie réservée aux personnes peut être bloquée en cas de détection d'un état de charge indésirable.

12. Procédé de contrôle de sécurité, **caractérisé en ce qu'**un système de contrôle de sécurité selon la revendication 1 est utilisé, où :
- dans une zone d'enregistrement des bagages (1), qui comprend une ou plusieurs stations de dépôt (1a, 1b, 1c), une personne enregistre ses bagages dans au moins un support de charge (2) mis à disposition dans une station de dépôt (1a, 1b, 1c),
- dans une station de contrôle des bagages (3), les bagages sont soumis à un examen par imagerie,
- la personne récupère ses bagages dans une zone de récupération des bagages (6), qui comprend une ou plusieurs stations d'enlèvement (6a, 6b, 6c), et
- les supports de charge (2) chargés de bagages sont transportés à partir de la zone d'enregistrement des bagages (1) jusqu'à la zone de récupération des bagages (6) en passant par la station de contrôle des bagages (3), et les supports de charge vidés (2) sont retransportés jusqu'à la zone d'enregistrement des bagages (1),
**caractérisé en ce que**, dans les stations de dépôt existantes (1a, 1b, 1c), le respect d'un niveau de charge prédéterminé des supports de charge (2) est surveillé comme étant leur état de charge, à chaque fois au moyen au moins d'un premier dispositif de surveillance (15) et/ou, dans les stations d'enlèvement existantes (6a, 6b, 6c), un support de charge (2) non complètement vidé est détecté comme étant son état de charge, à chaque fois au moyen au moins d'un deuxième dispositif de surveillance (25).

13. Procédé de contrôle de sécurité selon la revendication 12, **caractérisé en ce que**, au niveau de chaque station de dépôt (1a, 1b, 1c), un identifiant personnel de la personne est détecté au moyen d'un premier dispositif d'identification (10), et l'identifiant personnel de la personne est combiné, au moyen d'un dispositif de traitement de données (11), avec le support de charge (2) dans lequel se trouvent les bagages de la personne.

14. Procédé de contrôle de sécurité selon la revendication 12, **caractérisé en ce que** :
- la personne confirme, via une unité d'entrée, la fin de l'enregistrement des bagages dans le support de charge (2) et, à la suite de quoi, le support de charge (2) est évacué, ou bien :
- la personne signale la fin de l'enregistrement des bagages en fermant un couvercle du support de charge (2), à la suite de quoi le support de charge (2) est évacué, ou bien :
- le premier dispositif de surveillance (15) détecte des bagages dans le support de charge (2), et une unité de capteur (15) constate qu'aucune personne ne se trouve à la station de dépôt (1a, 1b, 1c), à la suite de quoi le support de charge (2) est évacué.

15. Procédé de contrôle de sécurité selon la revendication 12, **caractérisé en ce que** :
- après le déchargement du support de charge (2) effectué à la station d'enlèvement (6a, 6b, 6c), la personne achève le processus de déchargement par une entrée au niveau d'une unité d'entrée (24) et, à la suite de quoi, le support de charge (2) est évacué et/ou
- le processus de déchargement du support de charge (2) effectué dans une station d'enlèvement (6a, 6b, 6c) est achevé automatiquement et le support de charge (2) est évacué, tandis que la deuxième unité de surveillance (25) détecte un support de charge vide (2) et qu'une unité de capteur constate qu'aucune personne ne se trouve à la station d'enlèvement (6a, 6b, 6c).
